# EUROPÄISCHE PATENTSCHRIFT

(11) **EP 4 743 347 B1**
(45) Veröffentlichungstag und Bekanntmachung des Hinweises auf die Patenterteilung: **04.11.2026**
(21) Anmeldenummer: 24764849.6
(22) Anmeldetag: 02.09.2024
(51) Int. Cl.: B62D 1/18

(54) **VERFAHREN ZUM BETREIBEN EINER MOTORISCH VERSTELLBAREN LENKSÄULE, LENKSÄULE UND KRAFTFAHRZEUG**
METHOD FOR OPERATING A STEERING COLUMN WHICH CAN BE ADJUSTED USING A MOTOR, STEERING COLUMN, AND MOTOR VEHICLE
PROCÉDÉ DE FONCTIONNEMENT D'UNE COLONNE DE DIRECTION QUI PEUT ÊTRE RÉGLÉE À L'AIDE D'UN MOTEUR, COLONNE DE DIRECTION ET VÉHICULE AUTOMOBILE

(30) Priorität: 08.09.2023 BE 202305738
(43) Veröffentlichungstag der Anmeldung: 20.05.2026
(73) Patentinhaber: thyssenkrupp Presta AG, 9492 Eschen (LI); thyssenkrupp AG, 45143 Essen (DE)
(72) Erfinder: RIEDMANN, Patrick, 6850 Dornbirn (AT); WILLI, Andreas, 6923 Lauterach (AT)
(74) Vertreter: thyssenkrupp Intellectual Property GmbH
(86) Internationale Anmeldenummer: PCT/EP2024/074427
(87) Internationale Veröffentlichungsnummer: WO 2025/051666

(56) Entgegenhaltungen:
- WO-A1-2022/194526
- DE-A1- 102016 212 140
- DE-A1- 102019 108 466
- KR-A- 20220 159 505
- US-A- 5 780 988
- US-A1- 2023 107 621

## Beschreibung

Die Erfindung betrifft ein Verfahren zum Betreiben einer motorisch verstellbaren Lenksäule, eine Lenksäule und ein Kraftfahrzeug.

Moderne Kraftfahrzeuge weisen häufig verstellbare Lenksäulen auf, die in Längs- und/oder Höhenrichtung motorisch verstellt werden können. Auf diese Weise kann eine Lenkradposition eingestellt werden, die für den Fahrer komfortabel ist. Im Hinblick auf hochautomatisiertes Fahren sind besonders solche Lenksäulen wünschenswert, bei denen das Lenkrad in Längsrichtung weit nach vorn in Richtung Motorraum gefahren werden kann, sodass der Fahrer während des autonomen Fahrens mehr Platz für andere Aktivitäten erhält.

Häufig ist es dabei erforderlich, die Position der Lenksäule präzise bestimmen zu können. Beispielsweise gibt es Airbagsysteme, bei denen in Abhängigkeit von der aktuellen Position der Lenksäule unterschiedliche Airbags aktiviert und deaktiviert werden, um den Fahrer optimal zu schützen.

Aus Sicherheitsgründen sind verstellbare Lenksäulen häufig dazu ausgebildet, eine automatische Reversierbewegung vorzunehmen, wenn eine Kollision mit einem Objekt erkannt wurde, beispielsweise um zu verhindern, dass ein Objekt zwischen Trageinheit und Stelleinheit eingeklemmt wird. In solchen Fällen ist die Positionsbestimmung besonders anspruchsvoll. So liefert ein einzelner Hall-Sensor, wie er typischerweise zur Positionserkennung der Motorwelle eingesetzt wird, lediglich Rechtecksignale, die unabhängig von der Drehrichtung des Motors sind.

Eine verstellbare Lenksäule mit integrierter Positionserkennungsvorrichtung ist beispielsweise aus der DE 10 2019 108 466 A1 bekannt. Nachteil dieser Lösung ist der aufwendige Aufbau und die hohe Anzahl an Bauteilen.

Die DE 10 2016 212 140 A1 offenbart ein elektrisches Sicherheits-Fensterhebersystem mit einem ersten Hallsensor und einem zweiten Hallsensor, die um 90° zueinander versetzt in Bezug auf den Fenstermotor positioniert sind. Eine Steuerung ist dabei ausgebildet, basierend auf den von den Hallsensoren bereitgestellten Impulssignalen virtuelle Impulssignale zu erzeugen, um zu erkennen, ob ein Objekt zwischen dem Fenster und der Tür eingeklemmt wird. WO 2022/194526 A1 offenbart den Oberbegriff der Ansprüche 1 und 6.

Vor diesem Hintergrund ist es Aufgabe der vorliegenden Erfindung, ein Verfahren zum Betreiben einer motorisch verstellbaren Lenksäule bereitzustellen, das eine einfache und präzise Positionsbestimmung der Lenksäule aufweist. Der Erfindung liegt weiter die Aufgabe zu Grunde, eine entsprechende Lenksäule und ein Kraftfahrzeug anzugeben.

Erfindungsgemäß wird die Aufgabe mit Blick auf das Verfahren durch den Gegenstand des Anspruchs 1, mit Blick auf die Lenksäule durch den Gegenstand des Anspruchs 6 und mit Blick auf das Kraftfahrzeug durch den Gegenstand des Anspruchs 9 gelöst.

Konkret wird die Aufgabe durch ein Verfahren zum Betreiben einer motorisch verstellbaren Lenksäule für ein Kraftfahrzeug gelöst. Dabei weist die Lenksäule eine Trageinheit, eine Stelleinheit und eine Verstelleinrichtung auf, wobei die Verstelleinrichtung dazu ausgebildet ist, einen Abstand zwischen Trageinheit und Stelleinheit zu verstellen.

Die Verstelleinrichtung weist einen Elektromotor und einen Sensor auf, der dazu ausgebildet ist, eine Position einer Welle zu detektieren, die von dem Elektromotor antreibbar ist. Das Verfahren umfasst die folgenden Schritte:
- Antreiben des Elektromotors in eine erste Richtung zu einem ersten Zeitpunkt;
- Detektieren eines Stroms, der durch den Elektromotor fließt;
- Detektieren einer Kollision der Stelleinheit;
- Antreiben des Elektromotors in eine zweite Richtung, die der ersten Richtung entgegengesetzt ist;
- Detektieren eines zweiten Zeitpunkts, an dem der Strom betragsweise einen Schwellenwert unterschreitet,
   wobei der Schwellenwert gleich |U₂| / R ist, wobei U₂ eine Betriebsspannung des Elektromotors für den Antrieb in die zweite Richtung und R ein elektrischer Widerstand des Elektromotors ist;
- Berechnen einer Position der Stelleinheit relativ zur Trageinheit basierend auf einer Anzahl von Impulsen, die von dem Sensor zwischen dem ersten Zeitpunkt und dem zweiten Zeitpunkt detektiert worden sind.

Unter einer Kollision der Stelleinheit kann im Kontext dieser Erfindung das Auffahren der Stelleinheit auf ein Kollisionsobjekt verstanden werden, das sich im Verstellweg befindet. Bei dem Kollisionsobjekt kann es sich beispielsweise um ein festes oder federndes Anschlagelement handeln, welches den Verstellweg physisch begrenzt. Das Kollisionsobjekt kann aber auch jedes andere Objekt sein, welches ein Hindernis im Verstellweg darstellt, beispielsweise ein unbeabsichtigt in den Verstellweg geratenes Körperteil des Fahrers, das bedroht ist, von der verstellbaren Lenksäule eingeklemmt zu werden. Um sowohl das Kollisionsobjekt als auch die Lenksäule vor Beschädigung zu schützen und das Kollisionsobjekt freizugeben, wird gemäß dem beschriebenen Verfahren der Elektromotor in umgekehrter Richtung angetrieben, sobald eine Kollision detektiert worden ist.

Der Einfachheit halber wird im Rahmen der Patentanmeldung teilweise die erste Richtung als Vorwärtsrichtung und die zweite Richtung als Rückwärtsrichtung bezeichnet. Es versteht sich von selbst, dass diese Begriffswahl keine Einschränkung für das erfindungsgemäße Verfahren darstellt.

Das Antreiben des Elektromotors in die Rückwärtsrichtung kann über Anlegen einer Spannung an den Elektromotor erfolgen, die der Spannung zum Antrieb in die Vorwärtsrichtung entgegengesetzt ist. Hierbei ist jedoch zu beachten, dass der Zeitpunkt der Spannungsumkehr nicht identisch zu dem Zeitpunkt ist, an dem der Motor seine Rotationsrichtung ändert. Stattdessen läuft der Motor zunächst mit geringer werdender Drehzahl in bisheriger Richtung weiter.

Hinsichtlich der Positionsbestimmung liegt dem erfindungsgemäßen Verfahren daher der Gedanke zu Grunde, den elektrischen Strom, der durch den Elektromotor fließt, kontinuierlich zu detektieren. Wie im Folgenden erläutert, lässt sich der Zeitpunkt, an dem der Elektromotor nach einer Spannungsumkehr seine Rotationsrichtung tatsächlich ändert, präzise anhand des elektrischen Stroms erkennen.

Bei einem sich drehenden Elektromotor wird eine Spannung U_{EMK} induziert, die der an den Elektromotor angelegten Betriebsspannung entgegengesetzt und proportional zur Drehzahl ω ist, es gilt ${U}_{EMK} = k * ω$ für eine Konstante k.

Somit wird die Stärke des elektrischen Stroms I, der in einen Gleichstrommotor fließt, bestimmt durch die Differenz zwischen Betriebsspannung U und Induktionsspannung U_{EMK} sowie den Ohm'schen Wiederstand R der Wicklungen des Motors: $I = \left(U-{U}_{EMK}\right) / R .$

Wird aufgrund einer detektierten Kollision die Betriebsspannung des Motors von U₁ nach -U₂ geändert, so ändert sich der Strom von ${I}_{1} = \left({U}_{1}-k*ω\right) / R$ in ${I}_{2} = \left(-{U}_{2}-k*ω\right) / R ,$ wobei der Motor zum Zeitpunkt der Spannungsumkehr weiterhin mit Drehzahl ω in Vorwärtsrichtung dreht. Der tatsächliche Richtungswechsel tritt dagegen erst zu dem Zeitpunkt ein, wenn die Drehzahl ω kurzfristig 0 erreicht, d.h. der Motor in Vorwärtsrichtung "ausgelaufen" ist und aufgrund der umgekehrt gerichteten Spannung -U₂ beginnt, sich in die Rückwärtsrichtung zu drehen. Aufgrund des oben erläuterten Zusammenhangs gilt ω=0 genau dann, wenn für den Strom ${I}_{2} = \left(-{U}_{2}-k*0\right) / R = - {U}_{2} / R$ gilt. Unterschreitet der in dem Motor detektierte Strom (betragsmäßig) also den Schwellenwert von Î₂ = |U₂| / R erstmalig nach der Spannungsumkehr, so ist dies der Zeitpunkt, an dem sich der Motor beginnt, in die Rückwärtsrichtung zu drehen.

Das erfindungsgemäße Verfahren macht sich diesen Zusammenhang zu Nutze, indem es das Zeitintervall [t₁, t₂] präzise erfasst, in dem sich der Motor in der ersten Richtung bewegt. Hierbei gibt t₁ den Beginn des Antriebs in die erste Richtung und t₂ den Zeitpunkt der tatsächlichen Richtungsumkehr an, wobei t₂ wie oben erläutert durch Überwachen des elektrischen Stroms festgelegt wird.

Für die Positionserkennung der Stelleinheit relativ zur Trageinheit ist es somit ausreichend, die Anzahl von Impulsen zu zählen, die der Sensor im Zeitintervall [t₁, t₂] liefert. Jeder dieser Impulse entspricht einer Drehung der Welle, die von dem Motor angetrieben wird, in die erste Antriebsrichtung. Insbesondere werden so die Impulse, die nach Spannungsumkehr aber vor der tatsächlichen Richtungsumkehr des Motors (zum Zeitpunkt t₂) erfasst werden, korrekterweise der Vorwärtsbewegung des Motors zugerechnet.

Indem das vorliegende Erfahren den Zeitpunkt der Richtungsumkehr anhand des elektrischen Stroms identifiziert, ist es möglich, mit einem einzigen Hall-Sensor an einer Welle, die von dem Elektromotor angetrieben wird, auszukommen. Somit reduziert sich auch die Anzahl an Sensorschnittstellen an einem Steuergerät, welches das Verfahren implementiert. Das Verfahren stellt somit eine einfache und präzise Lösung für das Problem dar, die Position einer motorisch verstellbaren Lenksäule zu bestimmen.

Es versteht sich von selbst, dass die oben skizzierten Zusammenhänge für eine Reversierbewegung von Vorwärtsrichtung (bzw. erste Richtung) in Rückwärtsrichtung (bzw. zweite Richtung) ebenso, mutatis mutandis, für eine Reversierbewegung von Rückwärtsbewegung (bzw. zweiter Richtung) in Vorwärtsrichtung (bzw. erste Richtung) gelten.

Bevorzugte Ausführungsformen des Verfahrens sind in den Unteransprüchen angegeben.

In einer Ausführungsform wird die Kollision detektiert, indem festgestellt wird, dass der Strom (ggf. betragsweise) einen zweiten Schwellenwert überschreitet. Bei dem zweiten Schwellenwert kann es sich beispielsweise um den Anlaufstrom U/R des Elektromotors handeln. Dies bietet den Vorteil, dass der Elektromotor vor Beschädigung geschützt wird, indem eine Reversierbewegung eingeleitet wird, wenn der durch den Elektromotor fließende Strom zu hoch ist. Da der durch den Elektromotor fließende Strom ohnehin zum Zwecke der Positionsbestimmung kontinuierlich detektiert wird, ist kein weiterer Sensor erforderlich, um die Kollision zu detektieren.

In einer Ausführungsform erfolgt das Antreiben des Elektromotors in die zweite Richtung unmittelbar nach dem Detektieren der Kollision. Mit anderen Worten, die Reversierbewegung des Elektromotors wird schnellstmöglich eingeleitet. Auf diese Weise kann sowohl der Elektromotor als auch das Kollisionsobjekt vor Beschädigung geschützt werden, da eine weitere Bewegung des Elektromotors auf das Kollisionsobjekt hin vermieden wird.

In einer Ausführungsform ist die Betriebsspannung zum Antreiben des Elektromotors in die zweite Richtung maximal. Unter maximaler Spannung wird dabei die für den Antrieb der Lenksäule maximal vorgesehene Spannung verstanden. Diese Ausführungsform bietet den Vorteil, dass sich bei einer detektierten Kollision Stelleinheit schnellstmöglich in die zweite Richtung und damit von dem Kollisionsobjekt wegbewegt. Dies trägt insbesondere zum Schutz des Kollisionsobjekts bei, was für einen wirksamen Einklemmschutz wichtig ist.

In einer Ausführungsform umfasst das Verfahren ferner ein Steuern einer Fahrzeugkomponente basierend auf der Position der Stelleinheit relativ zur Trageinheit. Bei der Fahrzeugkomponente kann es sich beispielsweise um ein Airbagsystem handeln. Das Airbagsystem kann beispielsweise dazu ausgebildet sein, basierend auf der Lenksäulenposition einzelne Airbags zu aktivieren und zu deaktivieren. Indem der Fahrzeugkomponente die erfindungsgemäß ermittelte Position der Stelleinheit relativ zur Trageinheit bereitgestellt wird, kann die korrekte und zuverlässige Funktionsweise der Fahrzeugkomponente sichergestellt werden. Insgesamt kann somit die Sicherheit und der Bedienkomfort des Fahrzeugs, in dem das erfindungsgemäße Verfahren ausgeführt wird, verbessert werden.

Die Aufgabe wird konkret ferner durch ein eine Lenksäule für ein Kraftfahrzeug gelöst. Dabei weist die Lenksäule eine Trageinheit, eine Stelleinheit, ein Steuergerät und eine Verstelleinrichtung auf, wobei die Verstelleinrichtung dazu ausgebildet ist, einen Abstand zwischen Trageinheit und Stelleinheit zu verstellen. Die Verstelleinrichtung weist einen Elektromotor und einen Sensor auf, wobei der Sensor dazu ausgebildet ist, eine Position einer Welle zu detektieren, die von dem Elektromotor antreibbar ist. Dabei ist das Steuergerät dazu ausgebildet, die folgenden Schritte durchzuführen:
- Antreiben des Elektromotors in eine erste Richtung zu einem ersten Zeitpunkt;
- Detektieren eines Stroms, der durch den Elektromotor fließt;
- Detektieren einer Kollision der Stelleinheit;
- Antreiben des Elektromotors in eine zweite Richtung, die der ersten Richtung entgegengesetzt ist;
- Detektieren eines zweiten Zeitpunkts, an dem der Strom betragsweise einen Schwellenwert unterschreitet,
   wobei der Schwellenwert gleich |U₂|/R ist, wobei U₂ eine Betriebsspannung des Elektromotors für den Antrieb in die zweite Richtung und R ein elektrischer Widerstand des Elektromotors ist;
- Berechnen einer Position der Stelleinheit relativ zur Trageinheit basierend auf einer Anzahl von Impulsen, die von dem Sensor zwischen dem ersten Zeitpunkt und dem zweiten Zeitpunkt detektiert worden sind.

In einer Ausführungsform der Lenksäule ist der Sensor als Hall-Sensor ausgebildet oder umfasst einen Hall-Sensor.

In einer weiteren Ausführungsform der Lenksäule ist zwischen der Trageinheit und der Stelleinheit ein äußeres Mantelrohr angeordnet.

Die im Zusammenhang mit dem Verfahren genannten Vorteile gelten in entsprechender Weise auch für das erfindungsgemäße Steuergerät. Die im Zusammenhang mit dem Verfahren beschriebenen Verfahrensschritte und Ausführungsformen werden auch im Zusammenhang mit dem Steuergerät offenbart und zwar in der Form, dass das Steuergerät dazu konfiguriert bzw. angepasst ist, diese Verfahrensschritte durchzuführen.

Die Aufgabe wird ferner konkret durch ein Kraftfahrzeug gelöst, welches eine Lenksäule wie vorstehend beschrieben aufweist.

Die Erfindung wird nachstehend anhand eines Ausführungsbeispiels unter Bezug auf die beigefügten schematischen Figuren mit weiteren Einzelheiten näher erläutert.

Dabei zeigen
- Fig. 1: eine erfindungsgemäße motorisch verstellbare Lenksäule gemäß einem Ausführungsbeispiel;
- Fig. 2: einen zeitlichen Verlauf von Spannung, Stromstärke und Drehzahl bei der erfindungsgemäßen Steuerung einer motorisch verstellbaren Lenksäule gemäß einem Ausführungsbeispiel.

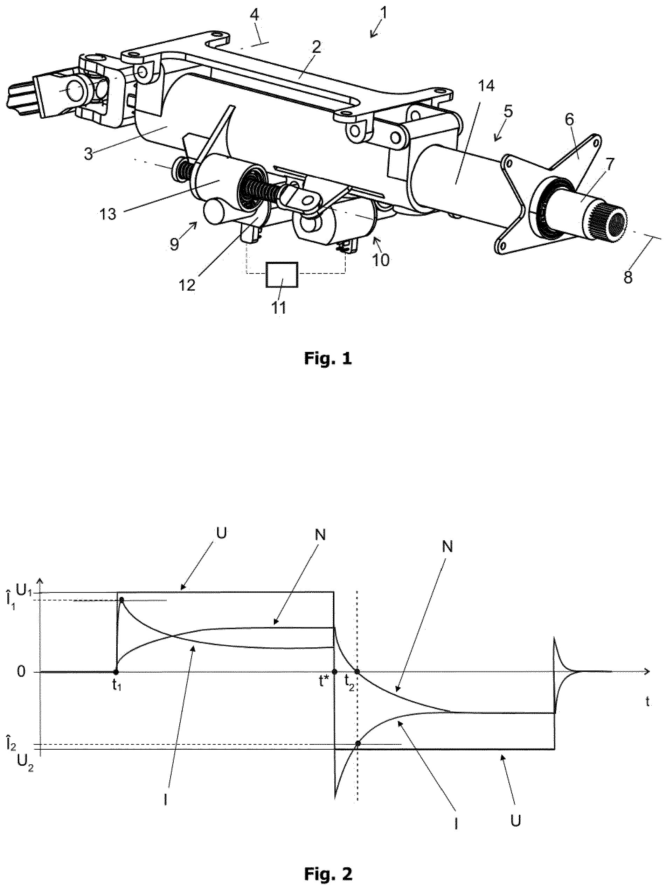

Figur 1 zeigt eine motorisch verstellbare Lenksäule 1 für ein Kraftfahrzeug gemäß einem Ausführungsbeispiel. Die Lenksäule 1 weist dabei eine Trageinheit 2 mit einem äußeren Mantelrohr 3 auf, die fest mit dem Fahrzeug verbunden ist. Weiterhin weist die Lenksäule 1 eine Stelleinheit 5 mit einem inneren Mantelrohr 14, einer Lenkwelle 7 und einem Befestigungselement 6 auf, an dem ein nicht gezeigtes Lenkstockschaltermodul festlegbar ist.

In dem äußeren Mantelrohr 3 und dem inneren Mantelrohr 14 ist eine Lenkwelle 7 so gelagert, dass sie um ihre Längsachse 8 drehbar ist. Die Lenkwelle 7 weist ein erstes Ende auf, welches mit einem nicht dargestellten Lenkrad verbindbar ist. Weiter weist die Lenkwelle 7 ein zweites Ende auf, welches mit einem Kreuzgelenk einer nicht dargestellten Lenkzwischenwelle verbunden ist. Alternativ kann das zweite Ende auch mit einem Handkraftsteller, auch als Handwheel-Aktuator bezeichnet, verbunden sein. Das innere Mantelrohr 14 ist in dem äußeren Mantelrohr 3 entlang der Längsachse 8 verschiebbar geführt. Durch Verschieben des inneren Mantelrohrs 14 relativ zu dem äußerem Mantelrohr 3 kann der Abstand zwischen Trageinheit 2 und Stelleinheit 5, und damit die Position des (nicht abgebildeten) Lenkrads im Fahrzeug, entlang der Längsachse 8 verstellt werden.

In einer nicht dargestellten Ausführungsform kann zwischen dem inneren Mantelrohr 14 und dem äußeren Mantelrohr 3 ein oder mehrere Zwischenmantelrohre angeordnet sein.

Zur Längsverstellung der Lenksäule 1 entlang der Längsachse 8 weist die Lenksäule 1 eine Verstelleinrichtung 9 mit einem Elektromotor 12 auf. Über das Schneckengetriebe 13, das am äußeren Mantelrohr 3 angeordnet ist, wird die Rotationsbewegung des Rotors (nicht dargestellt) des Elektromotors 12 in eine Linearbewegung der Gewindespindel des Schneckengetriebes 13 parallel zur Längsachse 8 übersetzt. Das eine Ende der Gewindespindel ist über einen Anlenkhebel mit dem inneren Mantelrohr 14 der Stelleinheit 5 verbunden, sodass die Linearbewegung der Gewindespindel eine Bewegung des inneren Mantelrohrs 14 entlang der Längsachse 8 bewirkt.

Nähere Einzelheiten einer derartigen Verstelleinrichtung 9 sind beispielsweise in der DE 10 2017 207 561 A1 beschrieben.

Zur Positionsbestimmung des Rotors des Elektromotors 12 weist die Verstelleinrichtung 9 ferner einen (nicht dargestellten) Sensor (z.B. Hall-Sensor) auf. Dieser kann im Schneckengetriebe 13 angeordnet sein, um die Rotation der Gewindespindel zu detektieren. Alternativ kann der Sensor direkt an dem Rotor bzw. der Abtriebswelle des Elektromotors 12 angeordnet sein. In beiden Fällen kann direkt bzw. indirekt die Position der Gewindespindel und/oder des Rotors des Elektromotors 12 aus den Sensorsignalen erhalten werden.

Darüber hinaus ist die Lenksäule 1 um die Achse 4 schwenkbar gelagert und über die Verstelleinrichtung 10 in Höhenrichtung verstellbar.

Ferner weist die Lenksäule 1 ein Steuergerät 11 auf, welches die Signale des Sensors empfängt und somit dazu ausgebildet ist, die Anzahl von Umdrehungen der Gewindespindel zu erfassen. Das Steuergerät 11 führt das erfindungsgemäße Verfahren aus, um basierend auf den Sensorsignalen und durch Detektieren des Stroms, der in den Elektromotor 12 fließt, die Position der Lenksäule 1 zu berechnen. Das Steuergerät 11 kann dazu ausgebildet sein, die berechnete Position an andere Steuergeräte des Fahrzeugs, beispielsweise über ein CAN-Interface, zu kommunizieren.

Figur 2 zeigt einen zeitlichen Verlauf von Spannung, Stromstärke und Drehzahl eines Elektromotors bei der erfindungsgemäßen Steuerung einer motorisch verstellbaren Lenksäule gemäß einem Ausführungsbeispiel.

Die horizontale Achse des dargestellten Diagramms zeigt den Verlauf der Zeit und kennzeichnet insbesondere die Zeitpunkte t₁, t* und t₂. Auf der vertikalen Achse sind für einen Gleichstrommotor (beispielsweise dem Elektromotor 12 aus Figur 1) die Verläufe der Betriebsspannung U, der elektrischen Stromstärke I und der Rotationszahl N dargestellt.

Bis zum Zeitpunkt t₁ liegt keine Spannung am Motor an (U=0). Dementsprechend sind sowohl die Stromstärke I als auch die Rotationszahl N ebenfalls gleich null.

Zum Zeitpunkt t₁ wird der Motor mit positiver Spannung U₁ in Vorwärtsrichtung betrieben. Der im Motor fließende Strom I steigt schlagartig auf den Wert Î₁, welcher dem Anlaufstrom des Motors entspricht, und fällt mit steigender Motordrehzahl allmählich ab. Umgekehrt steigt die Rotationszahl N allmählich an, da sich der Motor mit zunehmender Geschwindigkeit dreht. Ungefähr ab der Mitte zwischen den Zeitpunkten t₁ und t*, d.h. ab dem Zeitpunkt t₁ + (t*-t₁)/2, nehmen I und N bis zum Zeitpunkt t₂ einen konstanten Wert an.

Im Rahmen dieses Ausführungsbeispiels wird angenommen, dass zum Zeitpunkt t* eine Reversierbewegung durchgeführt wird. Der Einfachheit halber ist in Figur 2 ein Anstieg der Stromstärke, der auf die Kollision hindeuten könnte, jedoch nicht dargestellt.

Für die Reversierbewegung wird zum Zeitpunkt t* die Betriebsspannung des Motors schlagartig von U₁ auf -U₂ geändert. Wie am Kurvenverlauf der Drehzahl N zu sehen ist, dreht der Motor jedoch vorerst in Vorwärtsrichtung mit allmählich geringer werdender Drehzahl weiter und induziert eine entsprechende Spannung. In der Folge nimmt die Stromstärke I zum Zeitpunkt t* einen stark negativen Wert an.

In dem Zeitintervall zwischen t* und t₂ wirkt die Spannung -U₂ der durch die Vorwärtsbewegung des Rotors induzierten Spannung zunehmend entgegen, bis die Rotationszahl kurzfristig den Wert 0 annimmt. Dies ist genau dann der Fall, wenn der elektrische Strom betragsmäßig den Schwellenwert von Î₂ = |U₂| / R erstmalig unterschreitet, d.h. zum Zeitpunkt t₂.

Ab dem Zeitpunkt t₂ beginnt sich der Motor, in die zweite Richtung zu drehen (was in Figur 1 dem negativen Drehzahlbereich entspricht). Die Kurven von I und N verlaufen ab dem Zeitpunkt t₂ ähnlich wie ab dem Zeitpunkt t₁, bloß mit umgekehrten Vorzeichen. Somit entspricht das Zeitintervall [t₁, t₂] exakt dem Zeitintervall, in dem sich der Rotor in Vorwärtsrichtung dreht. Die während dieses Zeitintervalls detektierten Impulse des Sensors sind dementsprechend bei der Positionsbestimmung der Vorwärtsbewegung zuzurechnen.

Die vorhergehenden Ausführungsbeispiele sind lediglich beispielhaft zu verstehen.

So wird das erfindungsgemäße Verfahren zur Positionsbestimmung zwar im Kontext der Längsverstellung einer Lenksäule beschrieben. Das erfindungsgemäße Verfahren kann jedoch ebenso bei der Höhenverstellung eingesetzt werden.

Die Lenksäule, deren Position bestimmt werden soll, muss nicht notwendigerweise eine mechanische Verbindung zur Lenkachse des Fahrzeugs aufweisen. Mit anderen Worten, die Lenksäule kann auch Teil eines Steer-by-Wire-Lenksystems sein.

### Bezugszeichenliste

- 1: Lenksäule
- 2: Halteteil
- 3: äußeres Mantelrohr
- 4: Schwenkachse zur Höhenverstellung
- 5: Stelleinheit
- 6: Befestigungselement
- 7: Lenkwelle
- 8: Längsachse der Lenkwelle
- 9: Verstelleinrichtung (zur Längsverstellung)
- 10: Verstelleinrichtung (zur Höhenverstellung)
- 11: Steuergerät
- 12: Elektromotor
- 13: Schneckengetriebe
- 14: inneres Mantelrohr

- U: Spannung
- I: Stromstärke
- N: Drehzahl
- t₁: erster Zeitpunkt
- t₂: zweiter Zeitpunkt
- t*: Zeitpunkt der Spannungsumkehr

## Patentansprüche

1. Verfahren zum Betreiben einer motorisch verstellbaren Lenksäule (1) für ein Kraftfahrzeug,
wobei die Lenksäule (1) eine Trageinheit (2), eine Stelleinheit (5) und eine Verstelleinrichtung (9, 10) aufweist, wobei die Verstelleinrichtung (9, 10) dazu ausgebildet ist, einen Abstand zwischen Trageinheit (2) und Stelleinheit (5) zu verstellen,
wobei die Verstelleinrichtung (9, 10) einen Elektromotor (12) und einen Sensor aufweist, der dazu ausgebildet ist, eine Position einer Welle zu detektieren, die von dem Elektromotor (12) antreibbar ist,
wobei das Verfahren die folgenden Schritte umfasst:
- Antreiben des Elektromotors (12) in eine erste Richtung zu einem ersten Zeitpunkt (t₁);
- Detektieren eines Stroms (I), der durch den Elektromotor (12) fließt;
- Detektieren einer Kollision der Stelleinheit (5);
- Antreiben des Elektromotors (12) in eine zweite Richtung, die der ersten Richtung entgegengesetzt ist;
**gekennzeichnet dadurch, dass** das Verfahren die folgenden weiteren Schritte umfasst:
- Detektieren eines zweiten Zeitpunkts (t₂), an dem der Strom (I) betragsmäßig einen Schwellenwert (Î₂) unterschreitet,
wobei der Schwellenwert (Î₂) gleich |U₂|/ R ist, wobei U₂ eine Betriebsspannung des Elektromotors (12) für den Antrieb in die zweite Richtung und R ein elektrischer Widerstand des Elektromotors (12) ist;
- Berechnen einer Position der Stelleinheit (5) relativ zur Trageinheit (2) basierend auf einer Anzahl von Impulsen, die von dem Sensor zwischen dem ersten Zeitpunkt (t₁) und dem zweiten Zeitpunkt (t₂) detektiert worden sind.

2. Verfahren nach Anspruch 1,
wobei die Kollision detektiert wird, indem festgestellt wird, dass der Strom (I) einen zweiten Schwellenwert überschreitet.

3. Verfahren nach einem der vorhergehenden Ansprüche,
wobei das Antreiben des Elektromotors (12) in die zweite Richtung unmittelbar nach dem Detektieren der Kollision erfolgt.

4. Verfahren nach einem der vorhergehenden Ansprüche,
wobei die Betriebsspannung (U₂) zum Antreiben des Elektromotors (12) in die zweite Richtung maximal ist.

5. Verfahren nach einem der vorhergehenden Ansprüche,
ferner umfassend:
- Steuern einer Fahrzeugkomponente, beispielsweise eines Airbag-Systems, basierend auf der Position der Stelleinheit (5) relativ zur Trageinheit (2).

6. Lenksäule (1) für ein Kraftfahrzeug,
umfassend eine Trageinheit (2), eine Stelleinheit (5), ein Steuergerät (11) und eine Verstelleinrichtung (9, 10), wobei die Verstelleinrichtung (9, 10) dazu ausgebildet ist, einen Abstand zwischen Trageinheit (2) und Stelleinheit (5) zu verstellen,
wobei die Verstelleinrichtung (9, 10) einen Elektromotor (12) und einen Sensor aufweist, wobei der Sensor dazu ausgebildet ist, eine Position einer Welle zu detektieren, die von dem Elektromotor (12) antreibbar ist,
wobei das Steuergerät (11) dazu ausgebildet ist, die folgenden Schritte durchzuführen:
- Antreiben des Elektromotors (12) in eine erste Richtung zu einem ersten Zeitpunkt (t₁);
- Detektieren eines Stroms (I), der durch den Elektromotor (12) fließt;
- Detektieren einer Kollision der Stelleinheit (5);
- Antreiben des Elektromotors (12) in eine zweite Richtung, die der ersten Richtung entgegengesetzt ist; **gekennzeichnet dadurch, dass** das Steuergerät ausgebildet ist,
die folgenden weiteren Schritte durchzuführen:
- Detektieren eines zweiten Zeitpunkts (t₂), an dem der Strom (I) betragsmäßig einen Schwellenwert (Î₂) unterschreitet,
wobei der Schwellenwert (Î₂) gleich |U₂| / R ist, wobei U₂ eine Betriebsspannung des Elektromotors (12) für den Antrieb in die zweite Richtung und R ein elektrischer Widerstand des Elektromotors (12) ist;
- Berechnen einer Position der Stelleinheit (5) relativ zur Trageinheit (2) basierend auf einer Anzahl von Impulsen, die von dem Sensor zwischen dem ersten Zeitpunkt (t₁) und dem zweiten Zeitpunkt (t₂) detektiert worden sind.

7. Lenksäule (1) gemäß Anspruch 6, **dadurch gekennzeichnet, dass** der Sensor als Hall-Sensor ausgebildet ist oder einen Hall-Sensor umfasst.

8. Lenksäule (1) gemäß Anspruch 6 oder 7, **dadurch gekennzeichnet, dass** zwischen der Trageinheit (2) und der Stelleinheit (5) ein äußeres Mantelrohr (3) angeordnet ist.

9. Kraftfahrzeug, das eine Lenksäule (1) gemäß einem der Ansprüche 6 bis 8 aufweist.

## Claims

1. A method of operating a motor-driven adjustable steering column (1) for a motor vehicle, wherein the steering column (1) comprises a support unit (2), an positioning unit (5) and an adjustment mechanism (9, 10), wherein the adjustment mechanism (9, 10) is configured to adjust a distance between the support unit (2) and the positioning unit (5), wherein the adjustment mechanism (9, 10) comprises an electric motor (12) and a sensor configured to detect the position of a shaft that can be driven by the electric motor (12),
wherein the method comprises the following steps:
- driving the electric motor (12) in a first direction at a first point in time (t₁ );
- detecting a current (I) flowing through the electric motor (12);
- detecting a collision of the positioning unit (5);
- driving the electric motor (12) in a second direction opposite to the first direction;
**characterised in that** the method comprises the following further steps:
- detecting a second point in time (t₂) at which the magnitude of the current (I) falls below a threshold value (Î₂),
where the threshold value (Î₂) is equal to |U₂| / R, where U₂ is an operating voltage of the electric motor (12) for driving in the second direction and R is an electrical resistance of the electric motor (12);
- calculating a position of the positioning unit (5) relative to the support unit (2) based on a number of pulses detected by the sensor between the first point in time (t₁) and the second point in time (t₂).

2. The method according to claim 1,
wherein the collision is detected by determining that the current (I) exceeds a second threshold value.

3. A method according to one of the preceding claims,
wherein the electric motor (12) is driven in the second direction immediately after the collision is detected.

4. A method according to one of the preceding claims,
wherein the operating voltage (U₂) for driving the electric motor (12) in the second direction is at its maximum.

5. A method according to one of the preceding claims,
further comprising:
- controlling a vehicle component, for example an airbag system, based on the position of the positioning unit (5) relative to the support unit (2).

6. Steering column (1) for a motor vehicle,
comprising a support unit (2), an positioning unit (5), a control unit (11) and an adjustment mechanism (9, 10), wherein the adjustment mechanism (9, 10) is configured to adjust a distance between the support unit (2) and the positioning unit (5),
wherein the adjustment mechanism (9, 10) comprises an electric motor (12) and a sensor, the sensor being configured to detect the position of a shaft that can be driven by the electric motor (12),
wherein the control unit (11) is configured to carry out the following steps:
- driving the electric motor (12) in a first direction at a first point in time (t₁ );
- detecting a current (I) flowing through the electric motor (12);
- detecting a collision of the positioning unit (5);
- driving the electric motor (12) in a second direction opposite to the first direction;
**characterised in that** the control unit is configured to perform the following further steps:
- detecting a second point in time (t₂) at which the magnitude of the current (I) falls below a threshold value (Î₂),
where the threshold value (Î₂) is equal to |U₂| / R, where U₂ is an operating voltage of the electric motor (12) for driving in the second direction and R is an electrical resistance of the electric motor (12);
- calculating a position of the positioning unit (5) relative to the support unit (2) based on a number of pulses detected by the sensor between the first point in time (t₁) and the second point in time (t₂).

7. A steering column (1) according to claim 6, **characterised in that** the sensor is configured as a Hall sensor or comprises a Hall sensor.

8. A steering column (1) according to claim 6 or 7, **characterised in that** an outer casing tube (3) is arranged between the support unit (2) and the positioning unit (5).

9. A motor vehicle comprising a steering column (1) according to any one of claims 6 to 8.

## Revendications

1. Procédé de fonctionnement d'une colonne de direction (1) à réglage motorisé pour un véhicule automobile,
la colonne de direction (1) comportant une unité de support (2), une unité de réglage (5) et un dispositif de réglage (9, 10), le dispositif de réglage (9, 10) étant conçu pour régler une distance entre l'unité de support (2) et l'unité de réglage (5),
le dispositif de réglage (9, 10) comportant un moteur électrique (12) et un capteur conçu pour détecter la position d'un arbre pouvant être entraîné par le moteur électrique (12),
le procédé comprenant les étapes suivantes :
- entraîner le moteur électrique (12) dans une première direction à un premier instant (t₁) ;
- détecter un courant (I) circulant dans le moteur électrique (12) ;
- détecter une collision de l'unité de réglage (5) ;
- entraîner le moteur électrique (12) dans une deuxième direction opposée à la première direction ;
**caractérisé en ce que** le procédé comprend les étapes supplémentaires suivantes :
- détecter un deuxième instant (t₂) auquel le courant (I) passe en valeur absolue en dessous d'un valeur seuil (Î₂),
la valeur seuil (Î₂) étant égale à |U₂| / R, où U₂ est une tension de fonctionnement du moteur électrique (12) pour l'entraînement dans la deuxième direction et R est une résistance électrique du moteur électrique (12) ;
- calculer une position de l'unité de déplacement (5) par rapport à l'unité de support (2) sur la base d'un nombre d'impulsions détectées par le capteur entre le premier instant (t₁) et le deuxième instant (t₂).

2. Procédé selon la revendication 1,
dans lequel la collision est détectée en constatant que le courant (I) dépasse un deuxième valeur seuil.

3. Procédé selon l'une des revendications précédentes,
dans lequel l'entraînement du moteur électrique (12) dans la deuxième direction a lieu immédiatement après la détection de la collision.

4. Procédé selon l'une des revendications précédentes,
dans lequel la tension de fonctionnement (U₂) destinée à entraîner le moteur électrique (12) dans la deuxième direction est maximale.

5. Procédé selon l'une des revendications précédentes,
comprenant en outre :
- commander un composant du véhicule, par exemple d'un système d'airbag, sur la base de la position de l'unité de réglage (5) par rapport à l'unité de support (2).

6. Colonne de direction (1) pour un véhicule automobile,
comprenant une unité de support (2), une unité de réglage (5), un unité de commande (11) et un dispositif de réglage (9, 10), le dispositif de réglage (9, 10) étant conçu pour régler une distance entre l'unité de support (2) et l'unité de réglage (5),
le dispositif de réglage (9, 10) comportant un moteur électrique (12) et un capteur, le capteur étant conçu pour détecter la position d'un arbre pouvant être entraîné par le moteur électrique (12),
l'unité de commande (11) étant conçue pour exécuter les étapes suivantes :
- entraîner le moteur électrique (12) dans une première direction à un premier instant (t₁);
- détecter un courant (I) circulant dans le moteur électrique (12) ;
- détecter une collision de l'unité de réglage (5) ;
- entraîner le moteur électrique (12) dans une deuxième direction opposée à la première direction ;
**caractérisée en ce que** l'unité de commande est conçue pour exécuter les étapes supplémentaires suivantes :
- détecter d'un deuxième instant (t₂) auquel le courant (I) passe en valeur absolue en dessous d'une valeur seuil (Î₂),
la valeur seuil (Î₂) étant égale à |U₂| / R, où U₂ est une tension de fonctionnement du moteur électrique (12) pour l'entraînement dans la deuxième direction et R est une résistance électrique du moteur électrique (12) ;
- calculer une position de l'unité de réglage (5) par rapport à l'unité de support (2) sur la base d'un nombre d'impulsions détectées par le capteur entre le premier instant (t₁) et le deuxième instant (t₂).

7. Colonne de direction (1) selon la revendication 6, **caractérisée en ce que** le capteur est conçu comme un capteur à effet Hall ou comprend un capteur à effet Hall.

8. Colonne de direction (1) selon la revendication 6 ou 7, **caractérisée en ce qu'**un tube de gainage extérieur (3) est disposé entre l'unité de support (2) et l'unité de réglage (5).

9. Véhicule automobile comportant une colonne de direction (1) selon l'une des revendications 6 à 8.
